# EUROPÄISCHE PATENTSCHRIFT

(11) **EP 1 306 186 B1**
(45) Veröffentlichungstag und Bekanntmachung des Hinweises auf die Patenterteilung: **30.08.2006**
(21) Anmeldenummer: 02020361.8
(22) Anmeldetag: 12.09.2002
(51) Int. Cl.: B29C 45/16, B29C 45/17, B29C 45/04

(54) **Verstellbare Dreheinrichtung für Horizontal-Spritzgiessmaschinen**
Adjustable rotating unit for horizontal injection molding machine
Tourelle ajustable pour une machine a mouler par injection horizontale

(30) Priorität: 25.10.2001 DE 10152625
(43) Veröffentlichungstag der Anmeldung: 02.05.2003
(73) Patentinhaber: Krauss-Maffei Kunststofftechnik GmbH, 80997 München (DE)
(72) Erfinder: Lichtinger, Peter, 82256 Fürstenfeldbruck (DE)
(74) Vertreter: Wilhelm, Ludwig

(56) Entgegenhaltungen:
- EP-A- 0 743 156
- WO-A-01/10624
- DE-A- 1 942 259
- DE-A- 2 132 432
- DE-A- 3 140 711
- GB-A- 1 437 392
- US-A- 1 571 557
- US-A- 2 860 015
- US-A- 5 409 656
- PATENT ABSTRACTS OF JAPAN vol. 011, no. 250 (M-616), 14. August 1987 (1987-08-14) & JP 62 060618 A (JAPAN STEEL WORKS LTD:THE), 17. März 1987 (1987-03-17)

## Beschreibung

Die Erfindung bezieht sich auf eine Dreheinrichtung für Horizontal-Spritzgießmaschinen gemäß dem Oberbegriff des Patentanspruchs 1.

Eine derartige Dreheinrichtung ist aus der WO 01/10624 A1 bekannt. Diese bekannte Dreheinrichtung weist eine Grundplatte und einen auf der Grundplatte drehbar gelagerten Drehteller auf, wobei die Grundplatte mit dem Drehteller auf dem Maschinenbett einer Horizontal-Spritzgießmaschine zwischen einer beweglichen und einer festen Formaufspannplatte in Axialrichtung verschiebbar montiert wird. Im Betrieb trägt der Drehteller eine dritte Formplatte, eine sogenannte Wendeplatte, mit Formwerkzeughälften, die mit entsprechenden Formwerkzeughälften an der beweglichen bzw. festen Aufspannplatte zusammenwirken.

Um einen einwandfreien Betrieb der Spritzgießmaschine mit Wendeplatte zu gewährleisten, muss die Wendeplatte in Bezug auf die feste und die bewegliche Formaufspannplatte möglichst exakt positioniert werden. Andererseits treten immer Fertigungstoleranzen auf, so dass der Bedarf besteht, den Drehteller hinsichtlich der senkrechten Drehachse justieren zu können.

Erfindungsgemäß wird eine solche Möglichkeit geschaffen, in dem die Dreheinrichtung mit einer Exzentervorrichtung zum horizontalen Verschieben der vertikalen Achse des Drehtellers ausgestattet wird, wobei die Exzentervorrichtung aus ineinandergreifenden Exzenterringen (50, 51) aufgebaut ist und einer der Exzenterringe drehbar gegenüber dem anderen Exzenterring angeordnet ist und die Grundplatte (14) einen Lagerteil (54) für den Drehteller (13) und eine Verschiebeplatte (53) aufweist, wobei die Exzentervorrichtung (50, 51) zwischen Lagerteil und Verschiebeplatte angeordnet ist.

Exzentervorrichtungen mit drehbaren Exzenterringen sind aus der DE1942259, der US1571557 und der US2860015 sowie für Spritzgießwerkzeuge aus der EP0743156-A2, der GB1437392 und der DE2132432 bekannt.

Im Betrieb wird die Position der Wendeplatte bzw. Drehteller in Bezug auf die feste und die bewegliche Formaufspannplatte vermessen, und anschließend wird mit einem geeigneten Werkzeug die Exzentervorrichtung verstellt, so dass die vertikale Drehachse der Drehplatte verschoben wird, bis die Wendeplatte eine gewünschte Position erreicht hat.

Eine Ausführungsform der Erfindung wird anhand der beigefügten Zeichnungen erläutert. Es zeigen:
- Fig. 1: eine Prinzipskizze einer Horizontal-Spritzgießmaschine und
- Fig. 2: ein Detail der Grundplatte mit Exzentervorrichtung

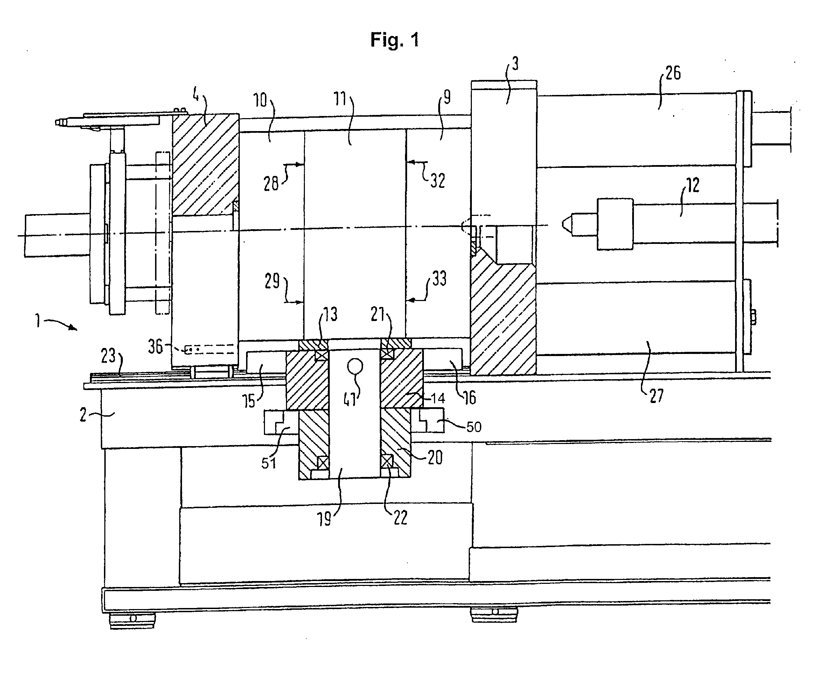

Bei der in Fig. 1 dargestellten Spritzgießmaschine 1 sind auf einem Maschinenbett 2 eine feste Formaufspannplatte 3 und eine bewegliche Formaufspannplatte 4 angeordnet, die auf einer Maschinenbettführung 23, 24 und 25 geführt und an Holmen 5 - 8 gezogen wird. Zwischen den Formaufspannplatten sind eine feste Formhälfte 9, eine bewegliche Formhälfte 10 und zwischen diesen eine Wendeplatte 11 vorgesehen. Zwischen der festen Formhälfte 9 und der dieser zugewandten Seite der Wendeplatte 11 wird eine Takt-1-Etage gebildet, während zwischen der beweglichen Formhälfte 10 und der dieser zugewandten Seite der Wendeplatte 11 eine Takt-2-Etage vorgesehen ist. Die Einspritzung im ersten Takt erfolgt durch ein der festen Formhälfte zugeordnetes Spritzaggregat 12, während die Einspritzung im zweiten Takt durch ein an der beweglichen Werkzeughälfte 10 angesetztes Spritzaggregat (hier nicht dargestellt) erfolgt. Die Wendeplatte 11 ist auf einer Dreheinrichtung aus einem in der Regel rechteckigen Drehteller 13 und einer Grundplatte 14 befestigt, wobei der Drehteller 13 auf der Grundplatte 14 drehbar gelagert ist. Ein vom Drehteller 13 nach unten weisender Drehzapfen (Rotor) 19 ist in einem entsprechenden Stator 20 und der Grundplatte 14 drehbar gelagert. Der Antrieb des Drehtellers erfolgt durch geeignete Antriebsmittel wie einem Zahnkranz, Ritzel, Hydro- oder Elektromotoren.

Die Grundplatte 14 ist auf stabilen Linearführungen 23 auf dem Maschinenbett 2 gelagert. Hierzu verfügt das Maschinenbett über stabile Linearschienen oder Gleitführungen 24, 25, die in die entsprechend gestaltete Unterseite der Grundplatte eingreifen.

Die Längsbewegung der Dreheinrichtung erfolgt mittels an den Formaufspannplatten auf beiden Seiten angelenkten Zahnstangen oder Steilgewindespindeln und an der Grundplatte angebrachte Zahnräder 41.

Symbolisch dargestellt ist in Fig. 1 eine Exzentervorrichtung aus zwei Exzenterringen 50, 51, wobei der Außenumfang des einen Exzenterringes 51 am Innenumfang des anderen Exzenterringes 50 anliegt. Durch Verdrehen eines der Exzenterringe gegen den anderen kann die Grundplatte entlang einer durch den Exzenter vorgegebenen Kreisbahn verschoben werden. Dabei ist die Exzenter-Kreisbahn vorzugsweise so gelegt, daß die Verschiebung im wesentlichen quer zur Längsachse der Spritzgießmaschine erfolgt, d.h. senkrecht zur Blattebene der Fig. 1.

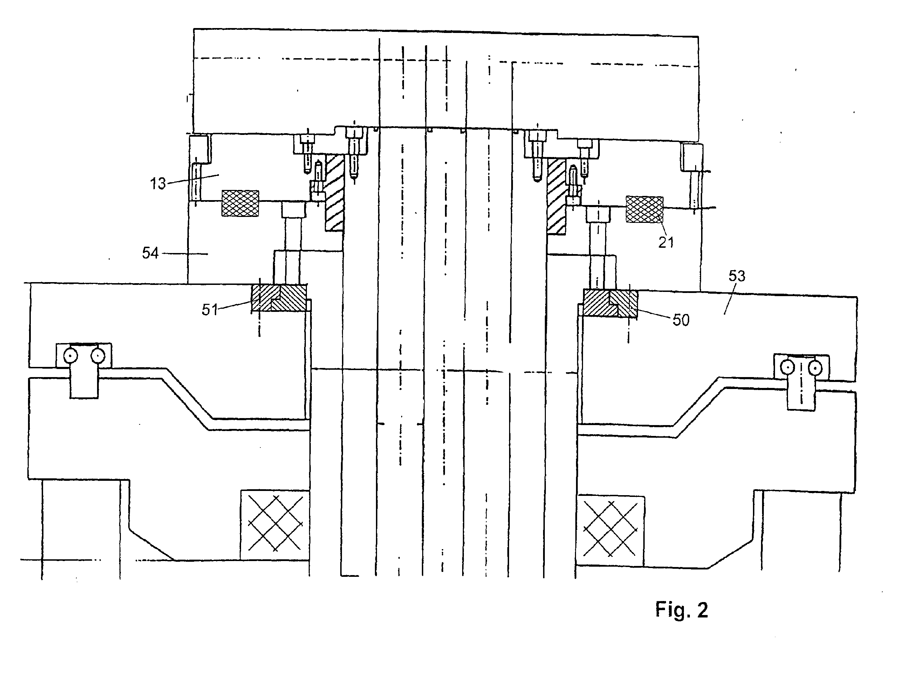

Fig. 2 zeigt einen detailierten Aufbau der erfindungsgemäßen Vorrichtung. In dieser Darstellung weist die Grundplatte 14 eine Lagerplatte 54 und eine Verschiebeplatte 54 auf. Die Lagerplatte 54 lagert über Nadellager 21 den Drehteller 13 und ist selbst auf die Verschiebeplatte 53 aufgelegt. Zwischen der Lagerplatte und der Verschiebeplatte ist die erfindungsgemäße Exzentervorrichtung mit Exzenterringen 50, 51 angeordnet. Durch ein Verdrehen der Exzenterringe 51, 50 gegeneinander, wird die Lagerplatte entsprechend der Drehung verschoben.

## Patentansprüche

1. Dreheinrichtung für eine Horizontal-Spritzgießmaschine mit einer Grundplatte (14) und einem auf der Grundplatte um eine vertikale Achse drehbar gelagerten Drehteller (13), **gekennzeichnet durch** eine Exzentervorrichtung (50, 51) zum horizontalen Verschieben des Drehtellers, wobei die Exzentervorrichtung aus ineinandergreifenden Exzenterringen (50, 51) aufgebaut ist und einer der Exzenterringe drehbar gegenüber dem anderen Exzenterring angeordnet ist und die Grundplatte (14) einen Lagerteil (54) für den Drehteller (13) und eine Verschiebeplatte (53) aufweist, wobei die Exzentervorrichtung (50, 51) zwischen Lagerteil und Verschiebeplatte angeordnet ist.

2. Horizontal-Spritzgießmaschine mit einer Dreheinrichtung nach Anspruch 1.

## Claims

1. A rotating unit for a horizontal injection moulding machine comprising a base plate (14) and a rotary table (13) which is mounted on the base plate and can be rotated about a vertical axis, **characterised by** an eccentric device (50, 51) for horizontal displacement of the rotary table, wherein the eccentric device is composed of intermeshing eccentric rings (50, 51) and one of the eccentric rings is disposed so that it can rotate with respect to the other eccentric ring and the base plate (14) has a bearing portion (54) for the rotary table (13) and a sliding plate (53), wherein the eccentric device (50, 51) is disposed between, bearing portion and sliding plate.

2. A horizontal injection moulding machine comprising a rotating unit according to claim 1.

## Revendications

1. Dispositif rotatif pour une machine à mouler par injection horizontale avec une plaque de base (14) et un plateau tournant (13) reposant de manière rotative autour d'un axe vertical sur la plaque de base, **caractérisé par** un dispositif d'excentrique (50, 51) pour le déplacement horizontal du plateau tournant, le dispositif d'excentrique étant constitué d'anneaux excentriques (50, 51) s'engrenant l'un dans l'autre et l'un des anneaux excentriques étant disposé de manière rotative par rapport à l'autre anneau excentrique et la plaque de base (14) présentant une pièce d'appui (54) pour le plateau tournant (13) et une plaque coulissante (53), le dispositif d'excentrique (50, 51) étant disposé entre la pièce d'appui et la plaque coulissante.

2. Machine à mouler par injection horizontale avec un dispositif rotatif selon la revendication 1.
